# EUROPEAN PATENT APPLICATION

(11) **EP 4 768 872 A2**
(43) Date of publication of application: **01.07.2026**
(21) Application number: 25226870.1
(22) Date of filing: 23.12.2025
(51) Int. Cl.: G01G 21/22

(54) **WEIGHING DISH FOR BALANCE**

(30) Priority: 27.12.2024 JP 2024231776; 27.12.2024 JP 2024231792
(71) Applicant: A&D Company, Limited, Tokyo 170-0013 (JP)
(72) Inventor: ODA, Hisanori, Kitamoto-shi, 364-8585 (JP); FUKUSHIMA, Yuta, Kitamoto-shi, 364-8585 (JP)
(74) Representative: dompatent

(57) **Abstract**

Provided at a weighing dish for a balance that is susceptible to wind are a dish main body having a screen portion; and an impact absorbing mechanism that absorbs an impact load.

## Description

### TECHNICAL FIELD

The present invention is art related to a weighing dish for a balance permitting achievement of highly accurate repeatability.

### BACKGROUND ART

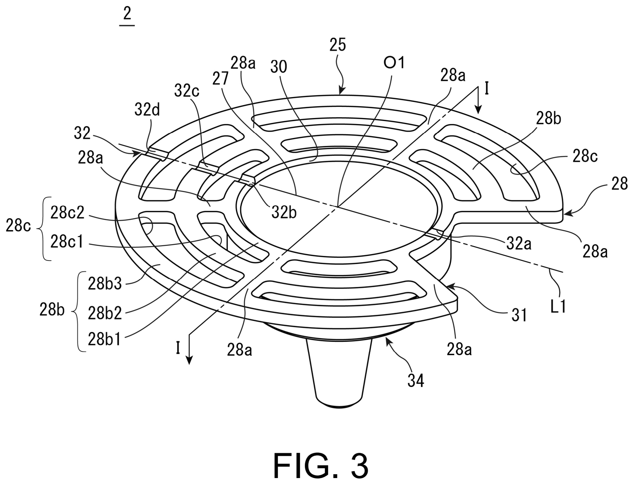

Disclosed at FIG. 3 of Patent Reference No. 1 is a weighing dish for a load weighing measuring device provided with a uniaxial boss below the central portion thereof, it being the case that such a weighing dish has been used in a small analytical balance having high resolution.

### PRIOR ART REFERENCES

### PATENT REFERENCES

Patent Reference No. 1: Japanese Patent Application Publication Kokai No. 2007-333605

### SUMMARY OF INVENTION

### PROBLEM TO BE SOLVED BY INVENTION

It is sought with a small analytical balance which has high resolution and which is equipped with a windscreen that it have highly accurate repeatability (that the magnitude of the variance of the value measured when the same mass is repeatedly placed thereon and removed therefrom be small). Furthermore, such accuracy of repeatability will worsen when the weighing dish is impinged on by tiny convection currents or when it is subjected to an impact load of a certain size at the time that the specimen is placed thereon.

Furthermore, where the weighing dish employed at a small analytical balance that has high resolution and that is equipped with a windscreen is intended to be used to weigh a specimen of large size, whereas it would be desirable that it be of large size in correspondence to the size of the specimen so as to permit the specimen to be placed thereon, there is occurrence of a problem in that the larger the size thereof the greater will be the adverse effect of convection currents on the measured weight.

The invention under application was conceived in light of the foregoing problems, it being an object thereof to provide a weighing dish for a balance that is easily assembled and that permits reduction of adverse effects caused by impact load and of convection currents acting on the weighing dish even when of large size.

### MEANS FOR SOLVING PROBLEM

To solve the foregoing problems, with regard to repeatability under windy conditions, by reducing susceptibility to wind pressure even when the weighing dish is large in size, and by reducing the impact load occurring at the weighing dish, the present inventor(s) considered the attainment of highly accurate repeatability.

It was determined that the present invention, which was conceived based on the aforesaid knowledge, should, in the context of a weighing dish for a balance that is susceptible to wind, have a dish main body that has a screen portion, and should have an impact absorbing mechanism that absorbs an impact load. The screen portion causes production of an effect whereby the total area impinged on by wind at the dish main body of the weighing dish is reduced so that the wind pressure is itself reduced, and an effect whereby passage of wind through the screen portion also causes the moment produced by wind pressure acting near the outside circumference of the weighing dish to be reduced, and the impact absorbing mechanism causes production of an effect whereby impact loads of prescribed magnitude which occur at the weighing dish are absorbed. Even where the weighing dish is large in size, adverse effect on the measured weight will be reduced to the extent that the wind pressure is reduced.

Furthermore, it is preferred that the weighing dish for the balance be such that the dish main body has a central portion, the screen portion being disposed peripherally about the central portion; and such that the impact absorbing mechanism is provided at a back face of the central portion. The impact absorbing mechanism, when installed at the back face of the central portion, will cause production of an effect whereby impact loads of prescribed magnitude are absorbed; and the screen portion, when disposed peripherally about the central portion, will cause production of an effect whereby the wind pressure itself acting thereon, as well as the tendency for production of a moment at the screen portion provided at the outside circumference of the dish main body, are made less likely to occur. Even when the outside diameter of the screen portion is large, adverse effect on the measured weight will be reduced to the extent that the moment produced at the outside circumference by wind is reduced.

Furthermore, it is preferred that the screen portion be formed from a plurality of spinal portions formed integrally with and radially from the central portion; a plurality of coupling portions that cause the plurality of spinal portions to be coupled in integral fashion; and a plurality of open portions which are defined by the plurality of spinal portions and the coupling portions. As a result of ability to place the specimen either above the central portion and spinal portion(s), or above the central portion and coupling portion(s), flexibility in placement is improved, and wind pressure and moment are reduced due to the open portions.

Furthermore, it is preferred that the open portions of the screen portion be such that a plurality thereof are formed in a region extending from near the central portion of the dish main body to near the outermost coupling portion. By allowing wind to pass through a region near the central portion or a region near the outermost coupling portion, this constitution will make it possible to further reduce wind pressure and moment.

Furthermore, it is preferred that the impact absorbing mechanism be secured to the dish main body. Because when the impact absorbing mechanism moves it does not move at the weight measuring sensor but rather it moves together with the weighing dish, this means that the dead weight of the impact absorbing mechanism will no longer act thereon during movement of the weight measuring sensor, which reduces the adverse effect on the weight measuring sensor, and makes it less likely that the weight measuring sensor will fail.

Furthermore, it is preferred that the dish main body have a step portion which is disposed peripherally about the central portion. Whereas if a thin plate-like specimen were to be placed on a flat surface the end portions thereof would be difficult to grasp, when a thin plate is propped up on the step portion it can be arranged such that the end portion is raised thereabove, as a result of which it will be easier to grasp.

Furthermore, it is preferred that it have a groove portion in a direction toward the outside circumference from a center of the dish main body. When a rod-like specimen is placed at the center portion and at groove portion(s) disposed radially therefrom, the specimen is retained on the weighing dish such that it does not easily roll away.

Furthermore, it is preferred that it have a notched portion at which a portion of an outside circumference of the dish main body is notched. Placing a portion of a specimen over the notched portion at the weighing dish will make it easier to grasp the portion that is placed within the notched portion.

Furthermore, it is preferred that it have a clip engagement mechanism that causes the dish main body to be joined to the impact absorbing mechanism. A clip engagement mechanism will make it possible for the impact absorbing mechanism to be easily attached to the dish main body.

Furthermore, it is preferred that the dish main body have a top portion having the screen portion and a central portion, and have a cylindrical portion which is arranged so as to protrude downward from an outside circumferential portion of the top portion; the impact absorbing mechanism have a dish bearing member that is provided with a spring seat which is formed at a location corresponding to the central portion of the dish main body and is provided with a plurality of arms which are formed so as to be integral with and protrude radially from the spring seat, and have a compression spring that sits on the spring seat and that exerts a restoring force such as tends to cause the dish main body to move away from the dish bearing member; and the clip engagement mechanism have a plurality of clips which are arranged so as to protrude inward from a bottom portion of the cylindrical portion of the dish main body at locations corresponding to the respective plurality of arms of the dish bearing member, and have engagement portions for the clips which are formed at the plurality of arms of the dish bearing member. The impact absorbing mechanism, when installed at the back face of the central portion, will cause production of an effect whereby impact loads of prescribed magnitude are absorbed; and the screen portion, when disposed peripherally about the central portion, will cause production of an effect whereby the wind pressure itself acting thereon, as well as the tendency for production of a moment at the screen portion provided at the outside circumference of the dish main body, are made less likely to occur. Even when the screen portion is large, adverse effect on the measured weight will be reduced to the extent that the moment produced at the outside circumference by wind is reduced. Furthermore, because the dish main body which is such that clips of the dish main body are made to engage with engagement portions formed at arms of the dish bearing member is caused by the compression spring to be acted on by a restoring force such as tends to cause it to move away from the dish bearing member, the dish main body is retained in positioned fashion to the dish bearing member. In this way, the dish main body can be easily attached to the dish bearing member to constitute a weighing dish.

### BENEFIT OF INVENTION

The present invention makes it possible to obtain a weighing dish capable of achieving highly accurate repeatability and in which there is little increase in wind pressure, production of moment, or adverse effect due to impact load even when used in a balance that is used under windy conditions.

### BRIEF DESCRIPTION OF DRAWINGS

[FIG. 1] Perspective view showing external appearance of a balance provided with a weighing dish associated with various embodiments of the present invention.
[FIG. 2] Perspective view of a balance at which the windscreen of FIG. 1 has been removed and having a weighing dish associated with a first embodiment.
[FIG. 3] Perspective view as seen from a point diagonally thereabove of an impact absorbing mechanism and a weighing dish associated with the first embodiment.
[FIG. 4] Exploded perspective view as seen from a point diagonally therebelow of the impact absorbing mechanism and weighing dish at FIG. 3.
[FIG. 5] Vertical sectional view of section taken along I-I of the impact absorbing mechanism and weighing dish at FIG. 3.
[FIG. 6] Perspective view of a balance at which the windscreen of FIG. 1 has been removed and having a weighing dish associated with a second embodiment.
[FIG. 7] (a) is a perspective view as seen from a point diagonally thereabove of an impact absorbing mechanism and a weighing dish associated with the second embodiment. (b) is a perspective view as seen from a point diagonally therebelow of an impact absorbing mechanism and a weighing dish associated with the second embodiment.
[FIG. 8] Exploded perspective view as seen from a point diagonally therebelow of the impact absorbing mechanism and weighing dish at FIG. 7.
[FIG. 9] Vertical sectional view of section taken along II-II of the impact absorbing mechanism and weighing dish at FIG. 7.

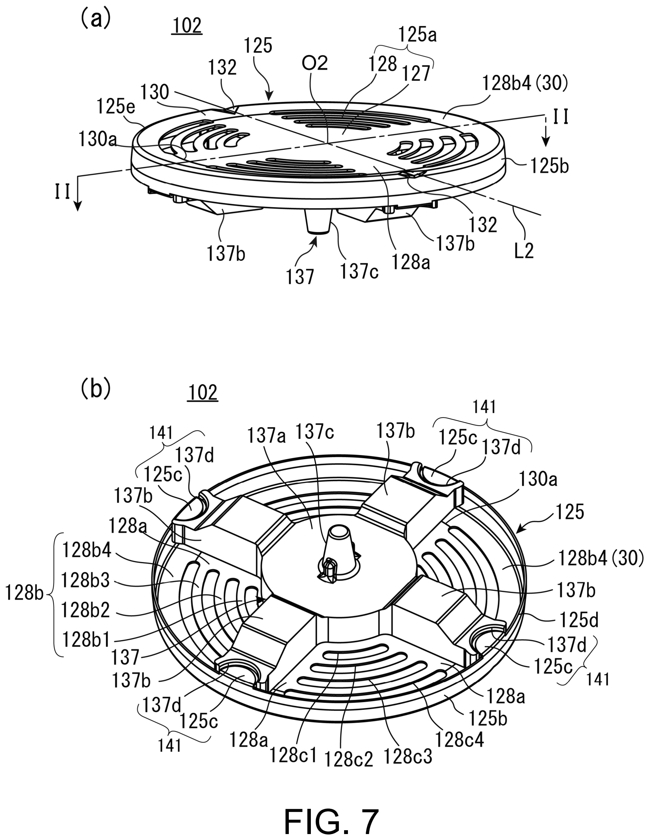

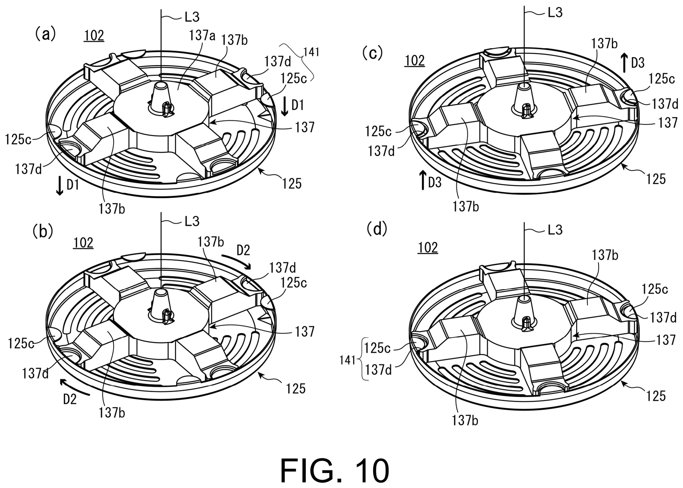

[FIG. 10] Drawings to assist in describing a procedure for attaching the impact absorbing mechanism to the weighing dish at FIG. 7, (a) being a drawing in which an engagement recess is displaced circumferentially from a clip and the impact absorbing mechanism is arranged above the weighing dish; (b) being a drawing in which the restoring force of a compression coil spring is overcome as a dish bearing member of the impact absorbing mechanism at (a) is pressed against the weighing dish; (c) being a drawing in which the dish bearing member at (b) is made to rotate and the engagement recess is arranged below the clip; and (d) being a drawing in which the dish bearing member at (c) is pulled away and the restoring force of the compression coil spring is made to cause the clip to engage with the engagement recess.

### EMBODIMENTS FOR CARRYING OUT INVENTION

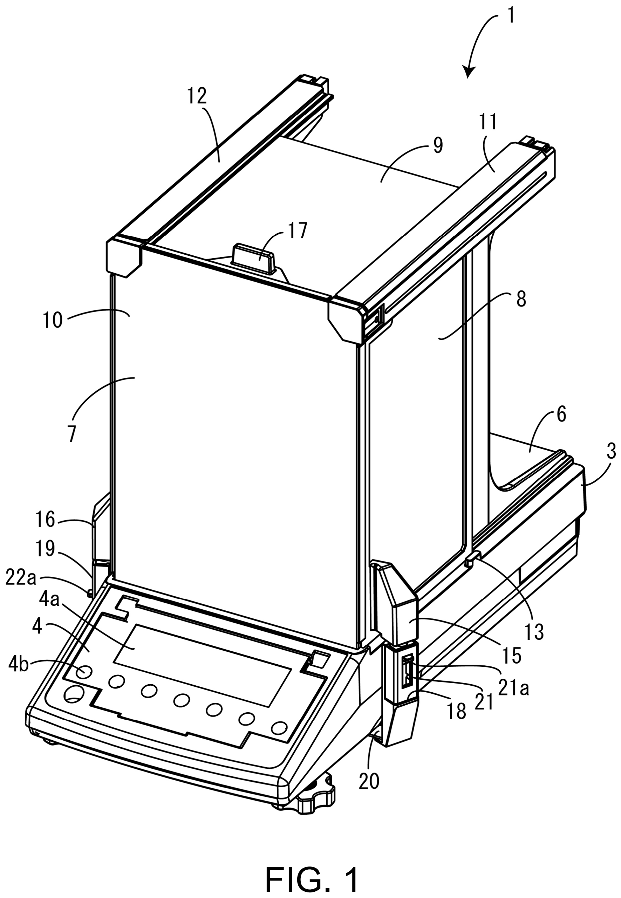

Next, referring to FIG. 1 through FIG. 5, preferred embodiments of the weighing dish for a balance of the present invention are described below.

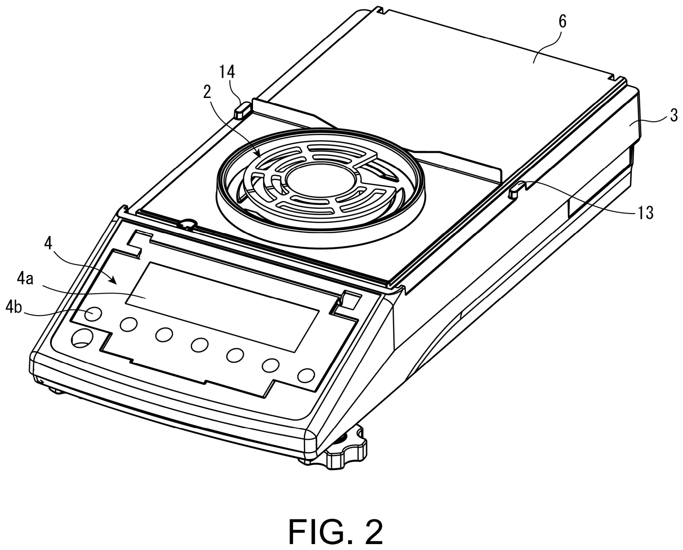

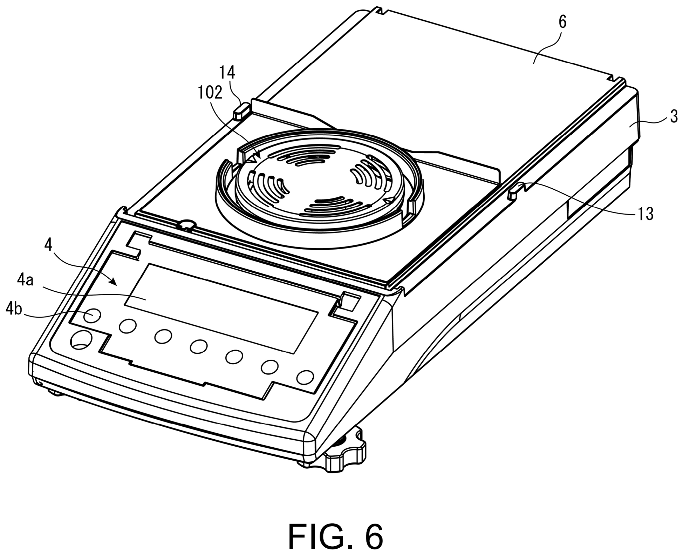

FIG. 1 and FIG. 2 show an electronic balance 1 having a weighing dish in accordance with a first and a second preferred embodiment of the present invention. FIG. 2 shows a drawing in which windscreen 10 of electronic balance 1 has been removed. As is the case at FIG. 1, electronic balance 1 comprises a weighing mechanism (not shown) such as a mass sensor of the electromagnetic force balance type, load cell type, or the like which is coupled to weighing dish 2 shown in FIG. 2 (also see weighing dish 102 shown in FIG. 6), as well as case 3 within which a controller (not shown) that controls the various operations of the electronic balance is provided. Furthermore, control panel 4 is provided at the front of the case 3. Provided at the top face of this control panel 4 are display 4a which displays the results of weighing and the like, and a plurality of various touch-panel-type actuation switches 4b.

As shown in FIG. 1, windscreen 10 comprising top door 9, a back panel (not shown), a pair of left and right side doors (only right side door 8 being shown), and front panel 7 is provided after the fashion of a bottomless box above upper panel 6 of case 3, the interior space in the shape of a rectangular parallelepiped forming a weighing chamber. Although the front panel 7, the pair of left and right side doors 8, the back panel, and the top door 9 making up windscreen 10 are made of transparent bodies, as a result of which it is possible to see therethrough into the weighing chamber, the weighing chamber is for convenience shown as being nonvisible at FIG. 1. The windscreen 10 causes the interior of the weighing chamber to be in a closed state at the time that weighing is carried out, preventing, as much as possible, weighing from being affected by flow of air during weighing-e.g., wind from air conditioning equipment, the breath of persons at the time that weighing is carried out, flow of air produced when people are walking, and so forth-that would otherwise act as wind pressure on load bearing portions centered on weighing dish 2 at FIG. 2 (and also weighing dish 102 at FIG. 6).

As shown in FIG. 1, supporting boxes 11, 12 are arranged at left and right top end portions of windscreen 10, the top end portion of right side door 8 being suspended so as to be slidable in a region toward the interior from restricting member 13 within the supporting box 11, and the top end portion of the left side door (not shown) being suspended so as to be slidable in a region toward the interior from restricting member 14 at FIG. 2 within the supporting box 12. Respectively provided at the right side door 8 and the left side door are handles 15, 16 for opening and closing thereof. Furthermore, the supporting boxes 11, 12 slidably support the left and right side ends of top door 9. As the top door 9 may be made to slide manually, it is provided with clasp 17.

Handles 15, 16 at the left side door (not shown) and the right side door 8 shown in FIG. 1 are respectively connected in detachably engaged fashion to detachable engagement members 18, 19, the respective detachable engagement members 18, 19 being mutually coupled by coupling plate 20 arranged below case 3. Sliding member 21 at the right side of balance 1 and its counterpart sliding member (not shown) at the left side of balance 1 respectively have clasps 21a, 22a, coupling and decoupling of handles 15, 16 being made to take place as a result of actuation by clasps 21a, 22a at the sliding members. The right side door 8 and the left side door can be made to slide in unison by depressing clasps 21a, 22a and causing mutual coupling of handles 15, 16; and it is also possible by raising clasps 21a, 22a and causing decoupling thereof to cause these to be made independently slidable.

Next, referring to FIGS. 3 through 5, a first preferred embodiment of a weighing dish for a balance provided with an impact absorbing mechanism will be described. Weighing dish 2 comprises dish main body 25 and impact absorbing mechanism 34.

As shown at FIG. 3 through FIG. 5, dish main body 25 has circular central portion 27, and has screen portion 28 which is formed in integral fashion peripherally about central portion 27, and cylindrical portion 29 which is formed in integral fashion directly below central portion 27. Furthermore, impact absorbing mechanism 34 has rubber part 35, compression coil spring 36, dish bearing member 37, and dish bearing retaining member 38, and is secured to cylindrical portion 29 of dish main body 25.

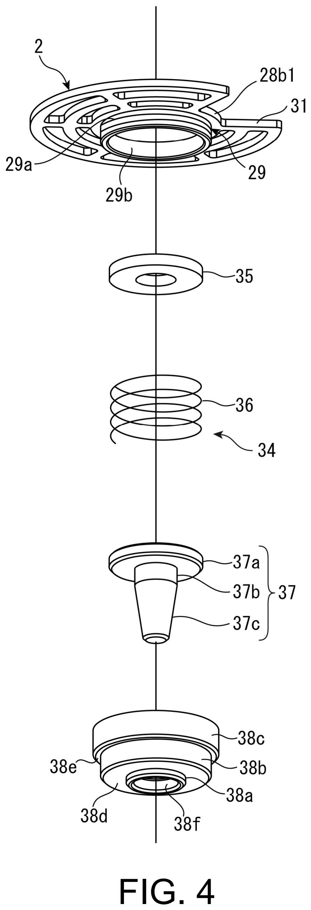

As shown at FIG. 3 through FIG. 5, screen portion 28 is concentrically shaped with respect to central portion 27. Screen portion 28 is made up of a plurality of spinal portions 28a, coupling portions 28b, and open portions 28c. The plurality of spinal portions 28a are formed so as to be respectively integral with central portion 27, and are formed so as to extend radially from center O1 of central portion 27 such that there is uniform spacing therebetween. Furthermore, the plurality of spinal portions 28a are coupled by a plurality of annular coupling portions 28b centered on center O1. Coupling portions 28b comprise inner coupling portion 28b1 which is formed in integral fashion at the outside circumference of central portion 27, outer coupling portion 28b3 which is coupled to the tips of respective spinal portions 28a (six locations), and middle coupling portion 28b2 which is provided between inner coupling portion 28b1 and outer coupling portion 28b3 and which couples the respective spinal portions 28a. Furthermore, a plurality of inner open portions 28c1 which are partitioned by the plurality of spinal portions 28a are formed in the circumferential direction between inner coupling portion 28b1 and middle coupling portion 28b2, and a plurality of outer open portions 28c2 which are partitioned by the plurality of spinal portions 28a are formed in the circumferential direction between middle coupling portion 28b2 and outer coupling portion 28b3. Outer open portions 28c2 are formed to the exterior of inner open portions 28c1. Note that the numbers of the pluralities of spinal portions 28a, coupling portions 28b, and open portions 28c are not limited to the numbers thereof that are disclosed at FIG. 3 and FIG. 4.

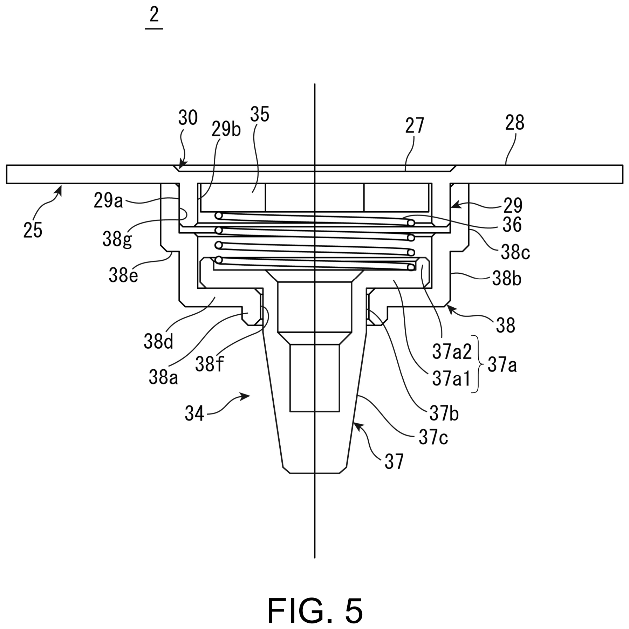

As shown in FIG. 5, impact absorbing mechanism 34 is secured to the back face of central portion 27 of dish main body 25, and absorbs the impact load when a specimen is placed on dish main body 25. On the other hand, screen portion 28 at the periphery of central portion 27 of dish main body 25 allows convection currents occurring within windscreen 10 during opening of right side door 8 or the like to pass through plurality of open portions 28c. Weighing dish 2 provides an effect whereby impact load is absorbed by impact absorbing mechanism 34, and an effect whereby, because the total area impinged on by convection currents at dish main body 25 is reduced as a result of presence of screen portion 28, the dish main body is less susceptible to wind pressure due to convection currents within windscreen 10 than would be the case with a conventional solid weighing dish at which there is no screen portion 28. As a result of these effects, weighing dish 2 in accordance with the present embodiment provides benefits in that the impact absorbing mechanism reduces adverse effects on weights measured by electronic balance 1 to which weighing dish 2 is attached and permits achievement of highly accurate repeatability, and in that the total area impinged on by convection currents is less than would be the case with a conventional weighing dish even in instances where the size of dish main body 25 is increased by enlarging screen portion 28 so as to make it possible for a specimen that is large in size such as a filter to be placed thereon.

Furthermore, because screen portion 28 has outer open portions 28c2 at locations radially outward from inner open portions 28c1, not only are convection currents produced within windscreen 10 made to pass through inner open portions 28c1 near central portion 27 of dish main body 25 but these are also made to pass through outer open portions 28c2 near outer coupling portion 28b3 that make up the outer edge of dish main body 25, as a result of which there is occurrence of an effect whereby the wind pressure acting on the outside circumferential edge portion of dish main body 25 is reduced. As a result, because it reduces the moment acting on dish main body 25 produced by wind pressure from convection currents within windscreen 10, and also causes reduction in the adverse effect on measured weight, screen portion 28 provides a benefit whereby highly accurate repeatability is achieved.

Furthermore, dish main body 25 shown in FIG. 3 has step portion 30 at the boundary between inner coupling portion 28b1 of screen portion 28 and central portion 27. Presence of step portion 30 causes central portion 27 to be formed one step lower than the top face of screen portion 28.

At dish main body 25, whereas if a thin plate-like specimen of a size that would fit within central portion 27 were to be placed thereon such that it lies entirely over central portion 27 this would result in a situation in which the two ends of the specimen would be difficult to grasp inasmuch as the specimen would lie there as if stuck flat against the plane of central portion 27, by arranging this so that one end of such a specimen is propped up on step portion 30 and the end portion is raised above central portion 27 this will make it easier to grasp the end of the specimen following weighing.

Furthermore, as shown in FIG. 3, dish main body 25 has, at the outside circumference thereof, notched portion 31, the shape of which is as if a portion of screen portion 28 had been removed by notching. Notched portion 31 is shaped as if middle coupling portion 28b2 and outer coupling portion 28b3 had been removed from a region extending between a pair of adjacent spinal portions 28a. Placing a portion of the specimen over the notched portion at weighing dish 2 will make it easier to grasp the portion of the specimen that protrudes into notched portion 31.

Furthermore, as shown in FIG. 3, dish main body 25 has groove portions 32 at coupling portions 28b of screen portion 28. Groove portions 32 are respectively formed at locations indicated by reference numerals 32a, 32b, 32c, and 32d on a line L1 that passes through notched portion 31 and center O1 of central portion 27. More specifically, groove portions 32 are provided at a total of four locations, these being, at inner coupling portion 28b1, the two locations consisting of location 32a which abuts notched portion 31, and location 32b which is opposite location 32a such that center O1 is straddled therebetween; and, at middle coupling portion 28b2 and outer coupling portion 28b3, one location at each of locations 32c, 32d which lie on an imaginary line extended outward radially with respect to central portion 27 from location 32b. The groove portions 32 at these four locations are each formed as arcuate recesses, groove portions 32 being formed such that the bottommost point of each recess is coplanar with the top face of central portion 27.

As shown in FIG. 3, when a long slender rod-like specimen is placed within groove portions 32 at the four locations indicated by reference numerals 32a, 32b, 32c, 32d on coupling portions 28b, this permits it to be retained in positioned fashion so that it does not roll away from center O1 of dish main body 25. Furthermore, by causing the bottommost points of the recesses to be coplanar with the top face of central portion 27, this makes it possible for a rod-like specimen within groove portions 32 to be stably retained such that it will make contact with both central portion 27 as well as coupling portions 28b. Note that while groove portions 32 may be formed at six locations on coupling portions 28b such that these are on a line L1 that does not pass through notched portion 31, because in accordance with the present embodiment these are formed on a line L1 that does pass through notched portion 31, this is more preferred due to the fact that not only does this make it possible for a long slender rod-like specimen to be retained so that it does not easily roll away, but also due to the fact that it will be easier to grasp the end of a rod-like specimen when this is arranged over notched portion 31.

Furthermore, as shown in FIG. 4 and FIG. 5, impact absorbing mechanism 34 has rubber part 35, compression coil spring 36, dish bearing member 37, and dish bearing retaining member 38.

As shown in FIG. 4 and FIG. 5, cylindrical portion 29, which is concentric with central portion 27, is formed in integral fashion directly below central portion 27, male threaded portion 29a being provided at the outside circumference of cylindrical portion 29. Furthermore, the interior of cylindrical portion 29 is formed so as to constitute housing 29b for rubber part 35. Rubber part 35 is a cushioning member which has a cylindrical shape, rubber part 35 having an outside diameter which is slightly less than the inside diameter of housing 29b and having a height which is not greater than the height of the interior of housing 29b. Compression coil spring 36 has an outside diameter which is less than the outside diameter of rubber part 35.

Furthermore, dish bearing member 37 shown in FIG. 4 and FIG. 5 is made up of, in order from the top, top portion 37a, first shaft portion 37b, and second shaft portion 37c, these being formed in coaxial and integral fashion. Top portion 37a is in the shape of a cylinder which is closed at one end and is provided with cylindrical portion 37a2 which is arranged in protruding and integral fashion above the outside circumference of bottom portion 37a1, the inside diameter of cylindrical portion 37a2 being formed so as to be slightly greater than the outside diameter of compression coil spring 36, the bottom end portion of compression coil spring 36 being retained within a region which is at the interior of cylindrical portion 37a2 and which is above bottom portion 37a1. First shaft portion 37b is in the shape of a cylinder having a certain outside diameter; second shaft portion 37c is formed in smoothly integral fashion at the bottom portion of first shaft portion 37b, being frustoconical in shape, being formed such that the shape thereof is such that the tip narrows as one proceeds downward.

Furthermore, dish bearing retaining member 38 shown in FIG. 4 and FIG. 5 is in the shape of a three-stage stepped cylinder at which first cylindrical portion 38a, second cylindrical portion 38b, and third cylindrical portion 38c, the outside diameters and inside diameters of which differ, are formed in integral fashion with flange portion 38d and crank portion 38e. First cylindrical portion 38a is such that flange portion 38d, which is arranged so as protrude outward horizontally from the top portion thereof, causes it to be formed so as to be integral with the bottom portion of second cylindrical portion 38b. Second cylindrical portion 38b is such that, at a location which is offset so as to be outward horizontally by an amount corresponding to the wall thickness of second cylindrical portion 38b from the top portion thereof, it is formed so as to be integral with the bottom portion of third cylindrical portion 38c by way of crank portion 38e.

As shown in FIG. 5, the inside diameter of hole 38f at first cylindrical portion 38a is formed so as to be slightly larger than the outside diameter of first shaft portion 37b at dish bearing member 37. Second cylindrical portion 38b is formed so as to be of identical inside diameter and outside diameter as cylindrical portion 29 of dish main body 25. Furthermore, the inside diameter of second cylindrical portion 38b is formed so as to be slightly larger than the outside diameter of cylindrical portion 37a2 at top portion 37a of dish bearing member 37. Furthermore, provided at the interior of third cylindrical portion 38c is female threaded portion 38g which is capable of being screwed to male threaded portion 29a formed at the outside circumference of cylindrical portion 29 of dish main body 25.

Impact absorbing mechanism 34 may be assembled as described below and is secured to dish main body 25. First, with regard to dish bearing member 37, first shaft portion 37b and second shaft portion 37c are inserted within hole 38f of dish bearing retaining member 38; and while in this state, top portion 37a is retained such that it is positioned above flange portion 38d and within second cylindrical portion 38b. Next, compression coil spring 36 is retained above bottom portion 37a1 and within cylindrical portion 37a2 of top portion 37a, and the top portion of compression coil spring 36 is made to come in contact with rubber part 35 which is arranged within housing 29b of cylindrical portion 29 of dish main body 25; and while in this state, third cylindrical portion 38c of dish bearing retaining member 38 is secured by causing it to be threadedly fastened until it reaches the top portion of cylindrical portion 29 of dish main body 25. Compression coil spring 36, being in a state such that it is compressed and yet capable of being extended and retracted vertically, causes application of a restoring force on dish bearing member 37 such as tends to cause it to move toward dish bearing retaining member 38. Dish main body 25 is secured to the balance by way of second shaft portion 37c of dish bearing member 37. When weighing dish 2 which has been secured is acted on by an impact load during placement of a specimen on dish main body 25, dish main body 25 and dish bearing retaining member 38 overcome the restoring force from compression coil spring 36 and descend relative to dish bearing member 37, the impact being absorbed as a result of further contraction by compression coil spring 36 within second cylindrical portion 38b. Furthermore, small pressures acting on dish main body 25 due to convection currents and the like produced within the windscreen are absorbed by rubber part 35.

Note that because impact absorbing mechanism 34 is not secured to a weight measuring sensor, not shown, at electronic balance 1 but rather in accordance with the present embodiment is secured to dish main body 25 to constitute weighing dish 2, this means that during transport or other such movement of electronic balance 1, when impact absorbing mechanism 34 is transported together with weighing dish 2 and not together with that portion of electronic balance 1 exclusive of weighing dish 2, this will make it possible to prevent the dead weight of impact absorbing mechanism 34 from acting on the weight measuring sensor during transport, as a result of which adverse effect on the weight measuring sensor can be reduced, making it less likely that the weight measuring sensor will fail as a result of such transport or the like.

Next, referring to FIG. 6 through FIG. 10, a second preferred embodiment of a weighing dish for a balance provided with an impact absorbing mechanism will be described. FIG. 6 shows a balance at which the windscreen has been removed and at which weighing dish 102 is employed instead of weighing dish 2 that was associated with the first preferred embodiment. Weighing dish 102 comprises dish main body 125, impact absorbing mechanism 134, and clip engagement mechanism 141.

Dish main body 125 shown in FIG. 6 through FIG. 10 comprises top portion 125a, cylindrical portion 125b, and clips 125c. Top portion 125a has central portion 127 which is a circular region, and screen portion 128 which is formed in integral fashion peripherally about central portion 127. Cylindrical portion 125b is arranged so as to be integral with and protrude downward from the outside circumferential edge portion of top portion 125a. Provided with uniform spacing in the circumferential direction at bottom portion 125d of cylindrical portion 125b are a plurality of the clips 125c which are arranged so as to be integral with and protrude inward from bottom portion 125d. The plurality of clips 125c are respectively semicircular in shape. Furthermore, impact absorbing mechanism 134 has dish bearing member 137 and compression coil spring 136 which is frustoconical in shape, and is retained in positioned fashion to dish main body 125 by clip engagement mechanism 141, described below. Regarding the number of clips 125c which are installed, so long these are present at a plurality of locations, note that they are not limited to being the number thereof (four locations) shown at FIG. 7, 8, and 10, nor need they be provided with uniform spacing in the circumferential direction.

As shown at FIG. 6 through FIG. 10, screen portion 128 is concentrically shaped with respect to central portion 127. Screen portion 128 is made up of a plurality of spinal portions 128a, coupling portions 128b1 through 128b4, and open portions 128c1 through 128c3. The plurality of spinal portions 128a are formed so as to be respectively integral with central portion 127, and are formed so as to extend radially from center O2 of central portion 127 such that there is uniform spacing therebetween. Furthermore, the plurality of spinal portions 128a are coupled in integral fashion by a plurality of concentric annular coupling portions 128b1 through 128b4 centered on center O2. Coupling portions 128b1 through 128b4 are made up of-these being provided in order of proximity from center O2-inner coupling portions 128b1; middle coupling portions 128b2, 128b3; and outer coupling portions 128b4 which are coupled to the tips of respective spinal portions 128a (four locations). Inner coupling portions 128b1 and middle coupling portions 128b2, 128b3 are formed with uniform spacing between outer coupling portions 128b4 and the outside circumference of central portion 127. Inner open portions 128c1 which are partitioned by the plurality of spinal portions 128a are formed between inner coupling portions 128b1 and the outside circumference of central portion 127; and middle open portions 128c2, 128c3 which are respectively partitioned by the plurality of spinal portions 128a are formed-in order of proximity from center O2-between inner coupling portions 128b1 and middle coupling portions 128b2, and between middle coupling portions 128b2 and middle coupling portions 128b3. Furthermore, outer open portions 128c4 which are partitioned by the plurality of spinal portions 128a near the outermost periphery of dish main body 125 are formed between middle coupling portions 128b3 and outer coupling portions 128b4.

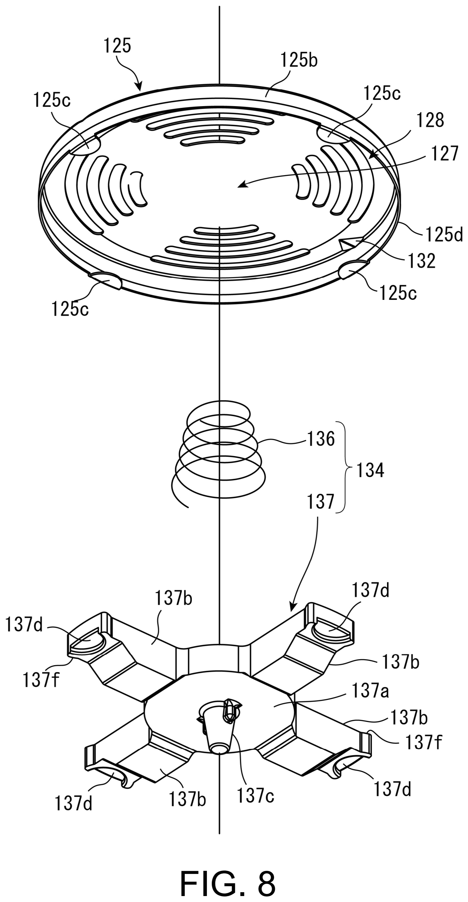

As shown in FIG. 7 and FIG. 8, presence of screen portion 128 causes there to be multiple pluralities of open portions 128c1 through 128c4 which are provided at each of several respective locations in the circumferential direction, as a result of which, because the total area impinged on by convection currents at dish main body 125 is reduced, an effect is provided whereby dish main body 125 is made less susceptible to wind pressure due to convection currents within windscreen 10 such as may occur when right side door 8 is opened or the like than would be the case with a conventional solid weighing dish at which there is no screen portion 128. As a result, screen portion 128 provides a benefit whereby highly accurate repeatability can be achieved at electronic balance 1 due to reduction in the adverse effect on measured weight by wind pressure from convection currents even in instances where the area provided at the outside circumference of central portion 127 is further enlarged and the size of dish main body 125 is increased so as to make it possible for a specimen that is large in size such as a filter to be placed thereon.

Furthermore, as shown in FIG. 7 and FIG. 8, as screen portion 128 has a plurality of open portions arrayed radially from inner open portions 128c1 near central portion 127 of dish main body 125 to outer open portions 128c4 near outer coupling portions 128b4, because convection currents occurring within windscreen 10 at FIG. 1 will be made to pass uniformly through all of inner open portions 128c1 near central portion 127, middle open portions 128c2, 128c3 at intermediate locations on screen portion 128, and outer open portions 128c4 near outer coupling portions 128b4, an effect is produced whereby wind pressure acting on the outside circumferential edge portion of dish main body 125 is reduced. As a result, because it reduces the moment acting on dish main body 125 produced by wind pressure from convection currents within windscreen 10, and also causes reduction in the adverse effect on measured weight, screen portion 128 also provides a benefit whereby highly accurate repeatability is achieved.

Furthermore, dish main body 125 shown at (a) in FIG. 7 and at (b) in FIG. 7 has step portion 130 which is annular in shape in conformance with outside circumferential end portion 125e of dish main body 125. Step portion 130 is an inclined portion which is inclined diagonally downward toward the interior of dish main body 125 from outside circumferential end portion 125e, and is formed from the entireties of outer coupling portions 128b4 and those regions at spinal portions 128a that extend from inner end portion 130a which is located beside outer open portions 128c4 to outside circumferential end portion 125e which is outward therefrom. Presence of step portion 130 causes central portion 127 to be formed one step lower than outside circumferential end portion 125e of dish main body 125.

At top portion 125a of dish main body 125, whereas if a thin plate-like specimen of a size that would fit within a region toward the interior from inner end portion 130a were to be placed thereon such that it lies entirely over said region this would result in a situation in which the two ends of the specimen would be difficult to grasp inasmuch as the specimen would lie there as if stuck flat against the plane of central portion 127, by arranging this so that one end of such a specimen is propped up on the outside circumferential end portion 125e of dish main body 125 which is higher than central portion 127 and the end portion is raised above central portion 127 this will make it easier to grasp the end of the specimen following weighing.

Furthermore, as shown at (a) in FIG. 7, dish main body 125 has a pair of groove portions 132 on step portion 130. The pair of groove portions 132 are respectively formed so as to lie on a line L2 passing through center O2 of central portion 127 and the pair of spinal portions 128a that straddle center O2 in mutually opposed fashion. While the pair of groove portions 132 are each formed as V-shaped recesses, they may also be formed as arcuate recesses.

As shown at (a) in FIG. 7, when a long slender rod-like specimen is placed within both groove portions 132 at the two locations, this permits it to be retained in positioned fashion so that it does not roll away from center O2 of dish main body 125. Note that while one set of groove portions 132 which straddle center O2 at mutually opposed locations are provided in the present embodiment, twelve or more sets thereof may be provided so long as they are present at locations which straddle center O2 in mutually opposed fashion.

Next, referring to FIG. 6 through FIG. 10, impact absorbing mechanism 134 which is retained in positioned fashion to dish main body 125 will be described. Impact absorbing mechanism 134 has compression coil spring 136 and dish bearing member 137.

As shown at (b) in FIG. 7 through FIG. 10, dish bearing member 137 has central spring seat 137a, a plurality of arms 137b that are arranged so as to be integral with and protrude radially outward from spring seat 137a, and shaft portion 137c. Spring seat 137a, when joined to dish main body 125 by clip engagement mechanism 141, described below, is arranged directly below the central portion of dish main body 125, and provided at the top surface of spring seat 137a is spring housing 137e, which is in the shape of a cylinder that is closed at one end and which houses compression coil spring 136, which is frustoconical in shape such that the tip thereof narrows as one proceeds upward. The plurality of arms 137b are formed at locations corresponding to the respective spinal portions 128a of screen portion 128. Furthermore, directly below spinal portions 128a, to avoid interference with open portions 128c1 through 128c4, the plurality of arms 137b are formed at locations offset in the circumferential direction from open portions 128c1 through 128c4. Furthermore, these are formed such that the length from center O2 to the tip portion of each arm 137b matches the distance from center O2 to the inside circumference of cylindrical portion 125b of dish main body 125. Furthermore, shaft portion 137c, which is a solid shaft portion and which is frustoconical in shape such that the tip thereof narrows as one proceeds downward, allows weighing dish 102 to be retained by electronic balance 1.

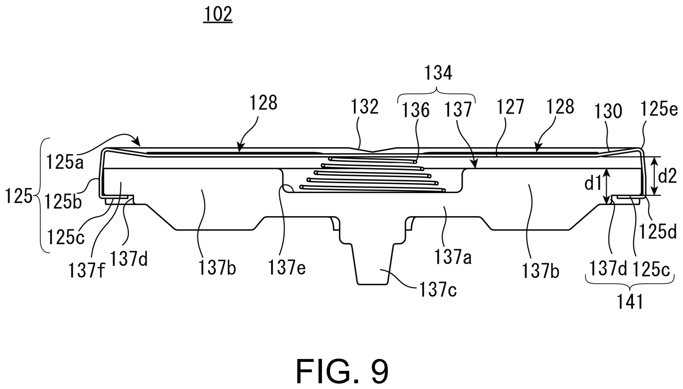

Furthermore, as shown at (b) in FIG. 7, FIG. 8, and FIG. 9, engagement recesses 137d are respectively formed at tip portions 137f of the plurality of arms 137b. Engagement recesses 137d, which are engagement recesses that are closed at their top surfaces and that are semicircular in shape so as to follow the contour of clips 125c, are provided at locations respectively corresponding to the plurality of clips 125c, and are formed as engagement portions permitting engagement with semicircular clips 125c. These are formed such that the depth in the vertical direction of each engagement recess 137d is greater than the thickness of clip 125c. Furthermore, as shown in FIG. 9, it is preferred that thickness d1 of tip portion 137f of arm 137b which has engagement recess 137d be formed so as to be not greater than length d2 in the vertical direction from the bottom face of central portion 127 of dish main body 125 to the top face of clip 125c. Clip engagement mechanism 141 is made up of clips 125c at dish main body 125, and engagement recesses 137d at arms 137b of dish bearing member 137.

Next, referring to FIG. 8 through FIG. 10, a method for attaching impact absorbing mechanism 134 to dish main body 125 will be described. First, compression coil spring 136 shown in FIG. 8 is installed in spring housing 137e of dish bearing member 137 shown in FIG. 9. Next, as shown at (a) in FIG. 10, dish bearing member 137 is arranged while causing arms 137b to be displaced circumferentially from spinal portions 128a so that clips 125c do not interfere with engagement recesses 137d, and dish bearing member 137 is lowered in the D1 direction and is pressed against dish main body 125 as the restoring force from compression coil spring 136 is overcome.

As shown at (b) in FIG. 10, after dish bearing member 137 is pressed against dish main body 125, dish bearing member 137 is rotated in the D2 direction about central axis L3, and engagement recesses 137d are aligned with the locations of clips 125c as shown at (c) in FIG. 10. In this state, upon letting go of dish bearing member 137, the restoring force from compression coil spring 136 will act on dish bearing member 137 so as to raise it in the D3 direction such that it is displaced upwardly from dish main body 125. At such time, as shown at (d) in FIG. 10, clips 125c slide within engagement recesses 137d so as to be engaged with engagement recesses 137d of dish bearing member 137, and are made to come in contact with the top surface portions of engagement recesses 137d. As shown in FIG. 9, due to the fact that clips 125c are made to engage with engagement recesses 137d, dish main body 125 is prevented from rotating in the circumferential direction, and the back surface of dish main body 125 is retained in a state in which it is displaced from the top surface of dish bearing member 137. Furthermore, by reversing the series of operations shown from (a) in FIG. 10 to (d) in FIG. 10, dish bearing member 137 can be easily removed from dish main body 125.

Weighing dish 102 in accordance with the present embodiment shown in FIG. 10 is such that compression coil spring 136 of impact absorbing mechanism 134 causes a restoring force to act in a direction such as tends to cause dish bearing member 137 and dish main body 125, at which clips 125c and engagement recesses 137d have been engaged, to mutually separate, and to be retained such that rotation is prevented, as a result of which it is possible to easily cause impact absorbing mechanism 134 to be removably installed with respect to dish main body 125 without use of a screw-type mechanism or the like.

When dish main body 125 to which impact absorbing mechanism 134 has been attached is acted on by an impact load during placement of a specimen thereon, it overcomes the restoring force from compression coil spring 136 and descends relative to dish bearing member 137, the impact being absorbed as a result of further contraction by compression coil spring 136 within spring housing 137e.

As shown in FIG. 9, impact absorbing mechanism 134 is secured to the back face of central portion 127 of dish main body 125, and absorbs the impact load when a specimen is placed on dish main body 125. On the other hand, screen portion 128 at the periphery of central portion 127 of dish main body 125 allows convection currents occurring within windscreen 10 during opening of right side door 8 or the like to pass through plurality of open portions 128c. Weighing dish 102 provides an effect whereby impact load is absorbed by impact absorbing mechanism 134, and an effect whereby, because the total area impinged on by convection currents at dish main body 125 is reduced as a result of presence of screen portion 128, the dish main body is less susceptible to wind pressure due to convection currents within windscreen 10 than would be the case with a conventional solid weighing dish at which there is no screen portion 128.

Weighing dish 102 in accordance with the present embodiment not only provides an effect whereby screen portion 128 causes the dish main body to be made less susceptible to wind pressure from convection currents occurring within windscreen 10 at FIG. 1, but is also such that impact absorbing mechanism 134, due to synergistic action resulting from absorption of impact load, provides a synergistic effect whereby adverse effects on weights measured by electronic balance 1 at FIG. 1 to which weighing dish 102 has been attached are further reduced, and highly accurate repeatability is achieved.

Note that because impact absorbing mechanism 34 is not secured to a weight measuring sensor, not shown, at electronic balance 1 but rather in accordance with the present embodiment is secured to dish main body 25 to constitute weighing dish 2, this means that during transport or other such movement of electronic balance 1, when impact absorbing mechanism 34 is transported together with weighing dish 2 and not together with that portion of electronic balance 1 exclusive of weighing dish 2, this will make it possible to prevent the dead weight of impact absorbing mechanism 34 from acting on the weight measuring sensor during transport, as a result of which adverse effect on the weight measuring sensor can be reduced, making it less likely that the weight measuring sensor will fail as a result of such transport or the like.

### EXPLANATION OF REFERENCE NUMERALS

- 1: Electronic balance
- 2: Weighing dish
- 25: Dish main body
- 27: Central portion
- 28: Screen portion
- 28a: Spinal portion
- 28b: Coupling portion
- 28c: Open portions
- 30: Step portion
- 31: Notched portion
- 32: Groove portion
- 34: Impact absorbing mechanism
- 35: Rubber part
- 36: Compression coil spring
- 37: Dish bearing member
- 38: Dish bearing retaining member
- 102: Weighing dish
- 125: Dish main body
- 125a: Top portion
- 125b: Cylindrical portion
- 125c: Clip
- 127: Central portion
- 128: Screen portion
- 128a: Spinal portion
- 128b1: Inner coupling portion
- 128b2, 128b3: Middle coupling portions
- 128b4: Outer coupling portion
- 128c1: Inner open portion
- 128c2, 128c3: Middle open portions
- 128c4: Outer open portion
- 130: Step portion
- 132: Groove portion
- 134: Impact absorbing mechanism
- 136: Compression coil spring
- 137: Dish bearing member
- 137a: Spring seat
- 137b: Arm
- 141: Clip engagement mechanism

## Claims

1. A weighing dish for a balance that is susceptible to wind, wherein the weighing dish for the balance is **characterized in that** it has:
a dish main body having a screen portion; and
an impact absorbing mechanism that absorbs an impact load.

2. The weighing dish for the balance according to claim 1 **characterized in that**
the dish main body has a central portion, the screen portion being disposed peripherally about the central portion; and
the impact absorbing mechanism is provided at a back face of the central portion.

3. The weighing dish for the balance according to claim 2 **characterized in that** the screen portion is formed from a plurality of spinal portions formed integrally with and radially from the central portion; a plurality of coupling portions that collectively cause the plurality of spinal portions to be mutually coupled in integral fashion; and a plurality of open portions which are defined by the plurality of spinal portions and the plurality of coupling portions.

4. The weighing dish for the balance according to claim 3 **characterized in that** the open portions of the screen portion are such that a plurality thereof are formed in a region extending from near the central portion to near an outermost one among the coupling portions.

5. The weighing dish for the balance according to claim 1 or 2 **characterized in that** the impact absorbing mechanism is secured to the dish main body.

6. The weighing dish for the balance according to claim 2 **characterized in that** the dish main body has a step portion formed peripherally about the central portion.

7. The weighing dish for the balance according to claim 1 or 2 **characterized in that** it has a groove portion in a direction toward the outside circumference from a center of the dish main body.

8. The weighing dish for the balance according to claim 1 or 2 **characterized in that** it has a notched portion at which a portion of an outside circumference of the dish main body is notched.

9. The weighing dish for the balance according to claim 1 **characterized in that** it has a clip engagement mechanism that causes the dish main body to be joined to the impact absorbing mechanism.

10. The weighing dish for the balance according to claim 9 **characterized in that**
the dish main body
has a top portion having the screen portion and a central portion, and has a cylindrical portion which is arranged so as to protrude downward from an outside circumferential portion of the top portion;
the impact absorbing mechanism
has a dish bearing member that is provided with a spring seat which is formed at a location corresponding to the central portion of the dish main body and is provided with a plurality of arms which are formed so as to be integral with and protrude radially from the spring seat, and has a compression spring that sits on the spring seat and that exerts a restoring force such as tends to cause the dish main body to move away from the dish bearing member; and
the clip engagement mechanism
has a plurality of clips which are arranged so as to protrude inward from a bottom portion of the cylindrical portion of the dish main body at locations corresponding to the respective plurality of arms of the dish bearing member, and has engagement portions for the clips which are formed at the plurality of arms of the dish bearing member.
